# EUROPÄISCHE PATENTSCHRIFT

(11) **EP 3 592 967 B1**
(45) Veröffentlichungstag und Bekanntmachung des Hinweises auf die Patenterteilung: **18.09.2024**
(21) Anmeldenummer: 19709479.0
(22) Anmeldetag: 06.03.2019
(51) Int. Cl.: F02M 31/125, F02M 31/10, F02M 31/16, F28F 3/08, F28D 21/00, F28F 21/08, F28D 9/00

(54) **VORWÄRMEINRICHTUNG**
PRÉCHAUFFEUR
PREHEATER

(30) Priorität: 09.03.2018 DE 202018101346 U
(43) Veröffentlichungstag der Anmeldung: 15.01.2020
(73) Patentinhaber: Stahlotec GmbH, 49170 Hagen a.T.W. (DE)
(72) Erfinder: NEYER, Christian, 79082 Osnabrück (DE)
(74) Vertreter: Schober, Mirko
(86) Internationale Anmeldenummer: PCT/EP2019/055620
(87) Internationale Veröffentlichungsnummer: WO 2019/170780

(56) Entgegenhaltungen:
- EP-A1- 0 094 885
- EP-A2- 0 258 529
- AT-U1- 7 373
- DE-A1- 102012 220 432
- DE-A1- 3 441 384
- JP-A- 2010 101 294
- US-A1- 2016 290 733

## Beschreibung

### TECHNISCHES GEBIET

Die Erfindung betrifft eine Vorwärmeinrichtung nach dem Oberbegriff des Anspruchs 1.

### STAND DER TECHNIK

Ein Vorwärmer entspricht prinzipiell einem Wärmetauscher, wie er in US 2016/290 733 A1 offenbart ist. Rechteckige Platten mit und ohne Löcher werden so angeordnet, dass ein Medium in Längsrichtung, ein weiteres Medium in Querrichtung die Plattenpackung durchströmt, ohne sich zu vermischen. An den Stirnseiten sind Eingang bzw. Ausgang des einen Mediums so angeordnet, dass das Medium in der gesamten Breite durch den Block strömt, an den Längsseiten sind Einlass bzw. Auslass des zweiten Mediums angeordnet. Durch die Länge des Quaders bedingt, lässt man das durchströmende Medium mehrfach hin und her fließen.

AT 007 373 U1 offenbart eine Vorwärmereinrichtung, bei der zwei Wärmetauscherplatten mittels einer Wärmeleitpaste zusammengefügt werden. Die eine Platte wird vom Kühlwasser eines Motors angewärmt, durch die andere strömt der zu erwärmende Diesel. Auf der der Kontaktfläche gegenüberliegenden Seite der zweiten Wärmetauscherplatte ist ein elektrisches Heizelement angeordnet, das die Erwärmung des Diesel übernimmt und/oder unterstützt, bis eine Mindesttemperatur des Diesels erreicht ist.

DE 34 41 384 A1 offenbart einen Dieselvorwärmer, bei dem die Dieselleitung mäandernd in der Ölwanne angeordnet ist, wobei das Öl des Motors den Diesel vorwärmt.

EP 0 094 885 A1 offenbart einen Dieselvorwärmer, der an dem Zylinderkopf eines Motors angeordnet ist. Zur Aufwärmung wird Diesel mäandernd durch einen Block geführt, wobei das Kühlwasser des Motors aus dem Zylinderkopf kommend an der mäandernden Dieselleitung vorbeigeführt wird und so den Diesel anwärmt.

Weitere Vorwärmeinrichtungen sind beispielsweise aus EP 0 258 529 A2 und EP 2 462 334 B1 bekannt.

Bei der aus EP 2 462 334 B1 bekannten Vorrichtung wird ein Treibstoff dadurch vorgewärmt, dass er durch einen Wärmetauscher geleitet wird. Dieser Wärmetauscher ist in Gestalt eines Rohres aufgebaut, welches einen Mantel aufweist, durch welchen der Treibstoff von einem Treibstoffeinlass zu einem Treibstoffauslass geleitet wird. Dieser Mantel stellt zum Rohrinneren hin eine Wärmetauscherfläche dar, die in Kontakt mit einem das Rohr in axialer Richtung durchströmenden Wärmemittel kommt. Auf diese Weise wird der im Rohrmantel fließende Treibstoff erwärmt.

Die bekannte Vorrichtung weist allerdings den Nachteil auf, dass die erforderliche Erwärmung des Treibstoffs auf die geschilderte Weise nur unzureichend erfolgt. Da der Treibstoff sich umso besser verbrennen lässt, je wärmer er ist, kommt es allerdings entscheidend darauf an, dass der Treibstoff durch den Wärmetauschprozess möglichst effektiv erwärmt wird. Des Weiteren ist an der bekannten Konstruktion nachteilig, dass der Rohrmantel Bauteile enthält, die miteinander verschweißt werden müssen. Treten an den Schweißstellen im Laufe des Betriebes Leckagen auf, so ist es möglich, dass Treibstoff und Wärmemittel miteinander vermischt werden. Dies kann dazu führen, dass ein nachgeschalteter Motor etwa mit einem Treibstoff/Wasser-Gemisch betrieben und somit möglicherweise beschädigt wird.

Aufgabe der vorliegenden Erfindung ist es daher, eine Vorrichtung der eingangs genannten Art anzugeben, mit welcher der Treibstoff möglichst effizient erwärmt werden kann und die geschilderten Nachteile vermieden werden können.

Gelöst wird diese Aufgabe durch eine Vorwärmeinrichtung zum Vorwärmen von Treibstoff einer Brennkraftmaschine mit einem Wärmemittel mit den Merkmalen des Schutzanspruchs 1. Vorteilhafte Ausführungsformen finden sich in den Unteransprüchen.

Die erfindungsgemäße Vorwärmeinrichtung weist eine Treibstofftransporteinrichtung mit einem Treibstoffeinlass und einem Treibstoffauslass auf. Der Treibstoffeinlass und der Treibstoffauslass sind dabei über einen Treibstofftransportkanal verbunden. Weiter umfasst die Vorwärmeinrichtung eine Wärmemitteltransporteinrichtung, die einen Wärmemitteleinlass und einen Wärmemittelauslass aufweist, wobei auch ein den Wärmemitteleinlass und den Wärmemittelauslass verbindender Wärmemitteltransportkanal vorgesehen ist, und/ oder mindestens ein Heizelement. Die Treibstofftransporteinrichtung und die Wärmemitteltransporteinrichtung und/ oder das mindestens eine Heizelement befinden sich dabei in thermischem Kontakt zueinander und bilden so einen Wärmetauscher. Über diesen Wärmetauscher kann ein in der Treibstofftransporteinrichtung transportierter Treibstoff durch ein in der Wärmemitteltransporteinrichtung transportiertes Wärmemittel und/oder durch das mindestens eine Heizelement erwärmt werden.

Erfindungsgemäß ist nun vorgesehen, dass die Wärmemitteltransporteinrichtung und die Treibstofftransporteinrichtung in einem, bevorzugt monolithisch ausgebildeten, metallischen Block angeordnet sind. Dabei sind der Treibstofftransportkanal und der Wärmemitteltransportkanal jeweils in dem Block wenigstens abschnittweise mäanderförmig und insbesondere strömungstechnisch voneinander separiert ausgebildet. Alternativ oder zusätzlich dazu ist erfindungsgemäß vorgesehen, dass die Treibstofftransporteinrichtung in einem metallischen Block angeordnet ist, wobei der Treibstofftransportkanal, zumindest abschnittweise, mäanderförmig ausgebildet ist und das mindestens eine Heizelement in oder an mindestens einer Abdeckplatte des metallischen Blocks angeordnet ist.

Bei der erfindungsgemäßen Vorwärmeinrichtung ist weiterhin vorgesehen, dass der Block Kupfer aufweist oder aus Kupfer besteht. Es hat sich gezeigt, dass der Treibstoff, bei dem es sich zum Beispiel um Diesel handeln kann, durch den Kontakt mit einer Kupferoberfläche katalytisch aufbereitet wird. Als Folge davon hat sich gezeigt, dass in den Abgasen im späteren Verbrennungsprozess weniger Stickoxide entstehen. Messungen haben gezeigt, dass sich auf diese Weise NOₓ-Anteile im Abgas erheblich reduzieren lassen.

Die so gestaltete Vorwärmeinrichtung weist eine ganze Reihe von Vorteilen auf. Auf der einen Seite wird durch die mäanderförmige Führung sowohl von Treibstoff als auch von Wärmemittel eine längere Verweilzeit im Wärmetauscher bewirkt. Durch die längere Verweilzeit kann das Wärmemittel natürlich wesentlich mehr Wärme an den Treibstoff abgeben, sodass der Treibstoff wesentlich effizienter erwärmt wird. Insbesondere durch die Tatsache, dass erfindungsgemäß sowohl die Treibstofftransporteinrichtung als auch die Wärmemitteltransporteinrichtung in einem metallischen Block untergebracht sind, gestaltet sich die Wärmeübertragung zwischen dem Wärmemitteltransportkanal und dem Treibstofftransportkanal besonders effektiv aufgrund der guten Wärmeleiteigenschaften von Metallen. Neben der Wärmezufuhr über eine Wärmetransporteinrichtung oder sogar alternativ dazu kann die Wärmezufuhr über ein Heizelement erfolgen. So kann bei erhöhtem Wärmebedarf das Heizelement zusätzliche Wärme an die Vorwärmeinrichtung liefern oder die alleinige Wärmezufuhr an die Vorwärmeinrichtung erfolgt über ein oder mehrere Heizelemente. Zudem wird bei der erfindungsgemäßen Vorwärmeinrichtung eine besonders große Wärmetauschfläche zur Verfügung gestellt, welche die Erwärmung zusätzlich verbessert. Besonders effektiv gestaltet sich die Wärmeübertragung, wenn der Block monolithisch ausgebildet ist, da keinerlei Schnittstellen mit Isolationswirkung zwischen dem Wärmemitteltransportkanal und/oder dem Heizelement und dem Treibstofftransportkanal existieren. Auf diese Weise befindet sich zwischen den beiden Kanälen und/oder zwischen dem Heizelement und zumindest einem der Kanäle immer ein Teil des metallischen Blocks, der die Wärmetauschfläche bildet. Dadurch entsteht ein weiterer Vorteil, es ist nämlich auf diese Weise auch nicht möglich, dass irgendwelche Verbindungen wie Schweißverbindungen, Schraubverbindungen oder dergleichen undicht werden oder Leckagen verursachen. Auf diese Weise kann es auch im Betrieb der Vorwärmeinrichtung nicht zum Vermischen von Treibstoff und Wärmemittel kommen.

Eine so gestaltete Vorwärmeinrichtung ist in der Lage, den Treibstoff wesentlich besser zu erwärmen, was den Treibstoffverbrauch eines nachgeschalteten Motors deutlich reduziert. Gerade bei der Anwendung im Bereich der Schiffsmotoren, bei denen nicht selten 5000 1 Diesel pro Tag verbraucht werden, schafft diese Möglichkeit gegenüber bisherigen Lösungen erhebliches Einsparpotenzial.

Erfindungsgemäß ist der Treibstofftransportkanal in dem metallischen Block eingearbeitet, eingefräst oder eingelassen. Es ist so beispielsweise möglich, ohne weitere Bauteile, also bauteilsparend, einen Rohblock aus Metall entsprechend zu bearbeiten und den Einlass und Auslass beispielsweise in die Stirnseiten des Blocks durch Bohren einzubringen. Wird beispielsweise eine Vorwärmeinrichtung verwendet, bei der allein durch Heizelemente die Wärmezufuhr erfolgt, so kann der Treibstofftransportkanal nicht nur in einer Ebene eingebracht werden, sondern von zwei gegenüberliegenden Seiten des Blocks in zwei Ebenen, was die mögliche Wärmezufuhr erhöhen bzw. den Aufbau der Vorwärmeinrichtung kompakter machen kann.

Erfindungsgemäß wird der Treibstoffkanal von mindestens einer Abdeckplatte abgedeckt. Da bei dieser Ausführungsform der Treibstofftransportkanal zur Außenseite des Blocks offen ist, kann anschließend eine oder, je nach Ausführung, beide offenen Seiten jeweils mit einer Abdeckplatte abgedeckt werden. Die jeweiligen Abdeckplatten werden anschließend bevorzugt mit dem Block fest verbunden, insbesondere verschweißt.

Es ist von besonderem Vorteil, wenn eine möglichst gute Durchströmung aller Bereiche des Transportkanals erfolgt. Vorteilhaft hierfür sind besonders turbulente Strömungen. Nach einer vorteilhaften Ausführungsform ist daher vorgesehen, dass im Treibstofftransportkanal Strömungsverwirbelungsmittel angeordnet sind. Diese sorgen dafür, dass das in den Transportkanal eintretende Medium den jeweiligen Transportkanal turbulent durchströmt. Beispielhaft können als Strömungsverwirbelungsmittel Stufen und/oder Vorsprünge innerhalb des Transportkanals ausgebildet sein. Gerade wenn man den Block und den darin befindlichen Transportkanal beispielsweise durch Fräsen herstellt, können durch entsprechende Aussparungen im Material entsprechende Vorsprünge oder Stufen ausgebildet werden.

Bei der erfindungsgemäßen Vorwärmeinrichtung ist weiterhin vorgesehen, dass der Treibstofftransportkanal auf einer ersten Seite des Blocks mäanderförmig angeordnet und dass der Wärmemitteltransportkanal auf einer, insbesondere der ersten Seite gegenüberliegenden, zweiten Seite des Blocks mäanderförmig angeordnet ist. Auf diese Weise lässt sich eine besonders kompakte Vorwärmeinrichtung ausbilden, bei der die beiden mäanderförmig ausgebildeten Transportkanäle übereinander flach angeordnet sind. Hierzu ist erfindungsgemäß vorgesehen dass der Treibstofftransportkanal in die erste Seite eingearbeitet, eingefräst oder eingelassen ist. Genauso ist auch der Wärmemitteltransportkanal in die zweite Seite eingearbeitet, eingefräst oder eingelassen. Auch hier ist es möglich, ohne weitere Bauteile, also bauteilsparend, einen Rohblock aus Metall entsprechend zu bearbeiten, indem die Kanäle an beiden Seiten eingefräst werden und die Einlässe und Auslässe beispielsweise in die Stirnseiten des Blocks durch Bohren eingebracht werden.

Da auch bei dieser Ausführungsform der Wärmemitteltransportkanal und der Treibstofftransportkanal zur Außenseite des Blocks offen sind, kann anschließend jeder der beiden jeweils mit einer Abdeckplatte abgedeckt werden. Die jeweiligen Abdeckplatten werden anschließend bevorzugt mit dem Block fest verbunden, insbesondere verschweißt.

Es ist von besonderem Vorteil, wenn eine möglichst gute Durchströmung aller Bereiche der Transportkanäle erfolgt. Vorteilhaft hierfür sind besondere turbulente Strömungen. Nach einer vorteilhaften Ausführungsform ist daher vorgesehen, dass im Treibstofftransportkanal und/oder in Wärmemitteltransportkanal Strömungsverwirbelungsmittel angeordnet sind. Diese sorgen dafür, dass das in die jeweiligen Transportkanäle eintretende Medium den jeweiligen Transportkanal turbulent durchströmt. Auch hier können beispielhaft als Strömungsverwirbelungsmittel Stufen und/oder Vorsprünge innerhalb der Transportkanäle ausgebildet sein.

Es hat sich als besonders vorteilhaft erwiesen, wenn das mindestens eine Heizelement an der Abdeckplatte des Treibstofftransportkanals angeordnet ist. Es geht um die Erwärmung des Treibstoffs. Durch das Anordnen des Heizelements an die Abdeckplatte des Treibstofftransportkanals kann die Materialstärke, die den Wärmelieferanten vom Wärmeabnehmer trennt, gering gehalten werden, was die Wärmeübertragung verbessert.

Ebenso besonders vorteilhaft hat sich erwiesen, dass jeweils mindestens ein Heizelement an der Oberfläche beider Abdeckplatten angeordnet oder in die Oberfläche eingelassen ist. Sollten Heizelemente die alleinige Wärmelieferung ausführen, wird bei einer Ausstattung beider Abdeckplatten mit Heizelementen die Übertragungsfläche erhöht, insbesondere ist dies von Vorteil, wenn auch der Treibstofftransportkanal in zwei Ebenen geführt wird. Aber auch zur Unterstützung eines anderen Wärmemittels bietet eine beidseitige Bestückung Vorteile.

Als vorteilhaft hat sich herausgestellt, wenn die Außenkontur des Blocks eine etwa quaderförmige Gestalt aufweist. Auf diese Weise kann aus einem größeren Rohmaterial relativ verschnittarm eine ganze Reihe erfindungsgemäße Vorwärmeinrichtungen hergestellt werden.

Ferner betrifft die Erfindung auch ein Fahrzeug, bei welchem eine erfindungsgemäße Vorwärmeinrichtung zum Einsatz kommt. Ein solches Fahrzeug weist daher bevorzugt einen Motor, einen Treibstofftank, Treibstoff, der sich im Treibstofftank befindet, ein Treibstoffzuführsystem, das den Treibstoff dem Motor zuführt, und eine zwischen Treibstofftank und Motor geschaltete Vorwärmeinrichtung auf, wie sie oben beschrieben wurde. Erfindungsgemäß ist hierbei der Treibstoffeinlass der Vorwärmeinrichtung mit einem zum Treibstofftank führenden Leitungsstrang und der Treibstoffauslass der Vorwärmeinrichtung mit einem zum Motor führenden Leitungsstrang verbunden. Ein Wärmemittel ist dabei im Kreislauf durch die Wärmemitteltransporteinrichtung geführt und/oder es wird mindestens ein Heizelement betrieben.

Das Wärmemittel kann jede Art von Fluid sein, z.B. Wasser. Der Treibstoff kann jeder fluide Treibstoff sein; gemäß einer bevorzugten Ausführungsform ist vorgesehen, dass es sich bei dem Treibstoff um Diesel handelt.

Um unabhängig von existierenden Wärmequellen im Fahrzeug zu sein, hat es sich als vorteilhaft erwiesen, das mindestens eine Heizelement elektrisch zu betreiben. Dabei kann die Energiequelle leicht und insbesondere auch schnell zu- oder abgeschaltet werden.

Natürlich ist die Erfindung für alle Arten von Fahrzeugen geeignet, in denen Brennkraftmaschinen vorkommen. Nach einer besonders bevorzugten Ausführungsform handelt es sich bei dem erfindungsgemäßen Fahrzeug um ein Wasserfahrzeug, insbesondere ein Schiff.

### KURZBESCHREIBUNG DER ZEICHNUNGSABBILDUNGEN

Die Erfindung wird nachfolgend anhand des in den Figuren 1 - 4 dargestellten Ausführungsbeispiels näher erläutert.
- Figur 1 -: zeigt eine perspektivische Explosionsansicht einer erfindungsgemäßen Vorwärmeinrichtung,
- Figur 2 -: zeigt eine Draufsicht auf den von der erfindungsgemäßen Vorwärmeinrichtung umfassten Block auf der Seite des Wärmemitteltransportkanals,
- Figur 3 -: zeigt eine Draufsicht auf den von der erfindungsgemäßen Vorwärmeinrichtung umfassten Block auf der Seite des Treibstofftransportkanals,
- Figur 4 -: zeigt eine Ansicht eines Schnitts durch den von der erfindungsgemäßen Vorwärmeinrichtung umfassten Block entlang der Linie A-A aus Figur 3,
- Figur 5 -: zeigt eine perspektivische Explosionsansicht einer anderen erfindungsgemäßen Vorwärmeinrichtung,
- Figur 6 -: zeigt eine Draufsicht auf den von der erfindungsgemäßen Vorwärmeinrichtung aus Figur 5 umfassten Block auf einer Seite des Treibstofftransportkanals.

### BESTER WEG ZUR AUSFÜHRUNG DER ERFINDUNG

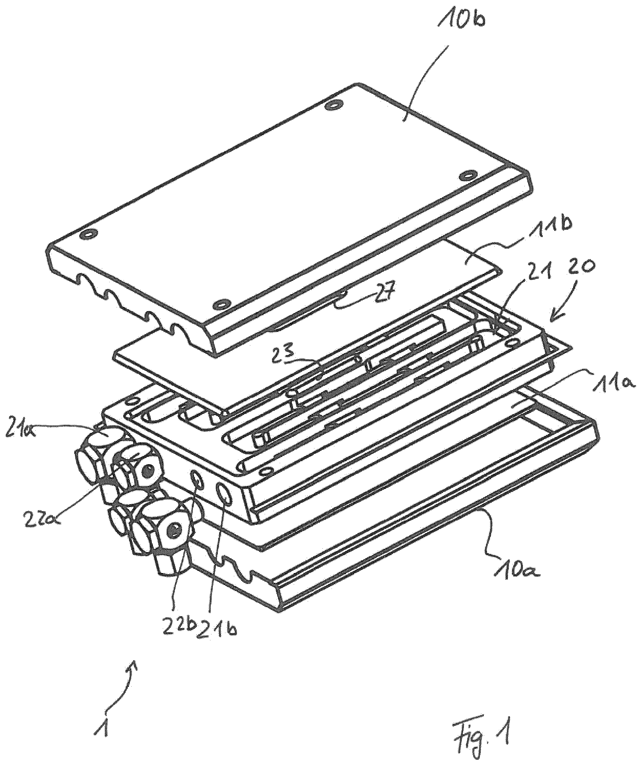

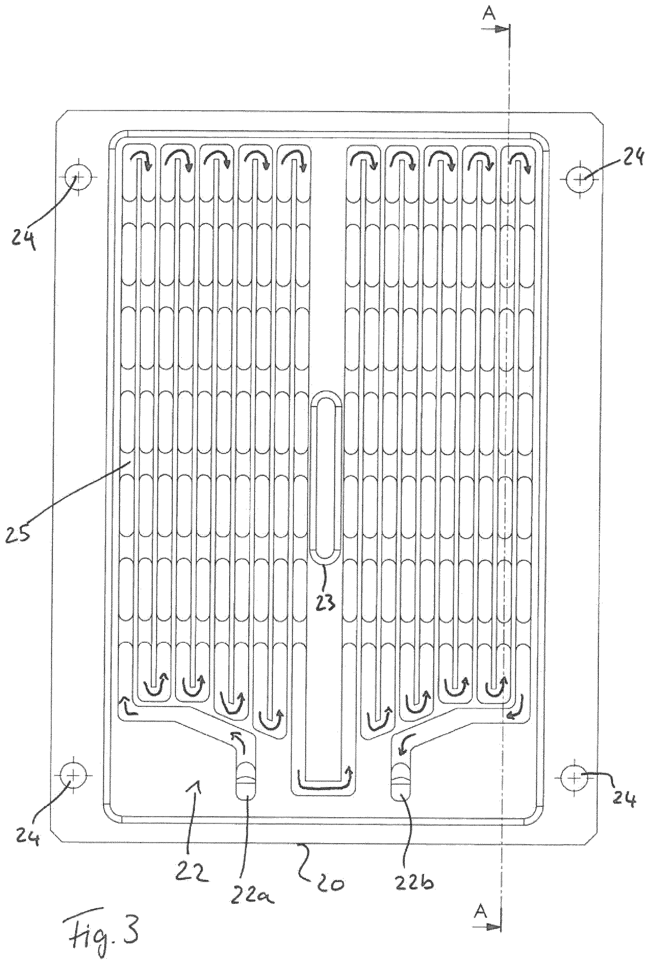

Die Vorwärmeinrichtung 1 weist, wie die Figur 1 zeigt, im Kern einen Block 20 auf, der in dieser Ausführungsform quaderförmig ist. In den oberen Teil des Blocks 20 mit der größten Fläche des Quaders ist eine Wärmemitteltransporteinrichtung 21 in Form eines Kanals eingelassen. Diese Wärmemitteltransporteinrichtung 21 ist mäanderförmig ausgeführt und reicht von einem stirnseitig angebrachten Wärmemitteleinlass 21a bis zu dem bevorzugt auf der gleichen Fläche angebrachten Wärmemittelauslass 21b. Der Einlass und der Auslass sind durch Bohrungen in der Stirnwand des Blocks 20 mit der Wärmetransporteinrichtung 21 verbunden. Auf der Unterseite, der die Wärmetransportmitteleinrichtung 21 tragenden Oberseite des Blocks 20 gegenüberliegenden Seite, die hier nicht gezeigt ist, ist die Treibstofftransporteinrichtung 22 eingebracht, die unten anhand von Figur 3 noch einmal ausführlicher beschrieben wird. Auf der Stirnseite, auf der auch der Wärmemitteleinlass 21a und Wärmemittelauslass 21b angeordnet sind, sind ebenfalls der Treibstoffeinlass 22a und der Treibstoffauslass 22b angeordnet. Die Ein- und Auslässe können aber auch an verschiedenen Stellen bzw. Schmalseiten des Blocks 20 vorgesehen sein. Die in dem Block 20, der aus Metall besteht, eingelassene Wärmemitteltransporteinrichtung 21 und Treibstofftransporteinrichtung 22 sind nach außen hin offene Transportkanäle 25, 26. Geschlossen werden die Transportkanäle 25, 26 jeweils durch eine Abdeckplatte 11a, 11b, die erfindungsgemäß in der Mitte der Platte 11a, 11b ein Langloch 27 oder längliche Vertiefung aufweisen. Dieses Langloch 27 bzw. die Vertiefung wird mit der Abdeckplatte 11a, 11b formschlüssig über einen dazu komplementär ausgebildeten Vorsprung 23 gelegt, wobei der Führungssteg 23 sich, bevorzugt mittig, auf der offenen Seite des Blocks 20 erhaben auf dem dortigen Mittelsteg befindet. Zusätzlich ist in dieser Ausführungsform der Rand der Fläche mit den eingelassenen Transportkanälen 25, 26 erhaben, so dass die Abdeckplatte 11a, 11b eingefasst ist. Die eingelegten Abdeckplatten 11a, 11b können fest mit dem Block 20 verbunden werden mittels Schrauben, Nieten oder durch Schweißen oder Löten. Da sowohl der Treibstoff als auch das Wärmemittel mit Druck durch die Transporteinrichtung 21, 22 gepumpt werden, muss die Verbindung zwischen Abdeckplatte 11a, 11b druckfest ausgeführt sein.

Weiter kann über die Abdeckplatten 11a, 11b ein Gehäusedeckel 10a, 10b angeordnet werden, der mit Schrauben an dem Block 20 befestigt werden kann oder ebenfalls angeschweißt wird. Der Gehäusedeckel 10a, 10b schützt die Vorwärmeinrichtung 1 und dient als einfassendes Gehäuse und kann dazu eine isolierende Wirkung haben, um den durch Wärmestrahlung entstehenden Wärmeverlust in der Vorwärmeinrichtung 1 gering zu halten.

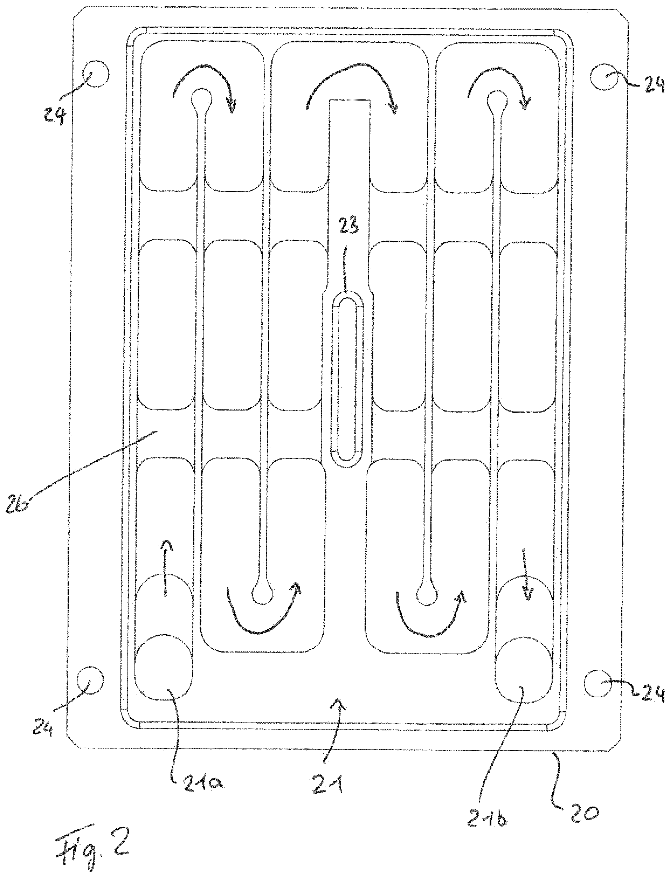

Die Draufsicht der Figur 2 zeigt den von der Vorwärmeinrichtung 1 umfassten Block 20 auf der Seite des Wärmemitteltransportkanals 26. Links unten in dem Block 20 ist ein Teil des Wärmemitteleinlasses 21a gezeigt. Von dort führt der Wärmemitteltransportkanal 26 in Mäanderform nach rechts und endet am Wärmemittelauslass 21b. In der Mitte ist zur Stabilisierung des Blocks 20 bevorzugt ein etwas stärkerer Steg belassen, auf dem sich beispielsweise auch der zentrierende Steg 23 für die Abdeckplatte 11b erhebt. In den Rand des Blocks 20, der bevorzugt erhaben gegenüber dem Bereich der Wärmetransporteinrichtung 21 ausgebildet ist, sind bevorzugt vier Bohrungen 24 eingebracht. In die Bohrungen 24 können Gewinde geschnitten sein, in denen Schrauben greifen, mit denen der Gehäusedeckel 10b an dem Block 20 befestigt wird. Alternativ dazu können die Bohrungen 24 auch durch den Block 20 hindurch führen, so dass die beiden Gehäusedeckel 10a, 10b zusammengeschraubt werden. Da der Block 20 die Wärme des Wärmemittels auf den Treibstoff übertragen soll, sollte der Block aus einem wärmeleitenden Material gebildet sein. Erfindungsgemäß ist der Block aus Metall gefertigt, kupferhaltig oder gar vollständig aus Kupfer.

Figur 3 zeigt eine Draufsicht auf den von der erfindungsgemäßen Vorwärmeinrichtung 1 umfassten Block 20 auf der Seite des Treibstofftransportkanals 25. Der Treibstofftransportkanal 25 verläuft vom Treibstoffeinlass 22a mäandernd zum Treibstoffauslass 22b. Der Treibstofftransportkanal 25 weist bevorzugt hier einen geringeren Querschnitt als der Wärmemitteltransportkanal 26 auf, wodurch der Treibstofftransportkanal 25 eine größere Oberfläche besitzt und dadurch die Wärmeaufnahme des darin geführten Treibstoffs verbessert wird. Auch auf dieser Seite ist mittig ein breiterer Steg mit dem erhabenen Steg 23 für die Abdeckplatte 11b angeordnet. Ebenfalls weist der auch hier bevorzugt erhabene Rand des Blocks 20 die Befestigungsbohrungen 24 auf.

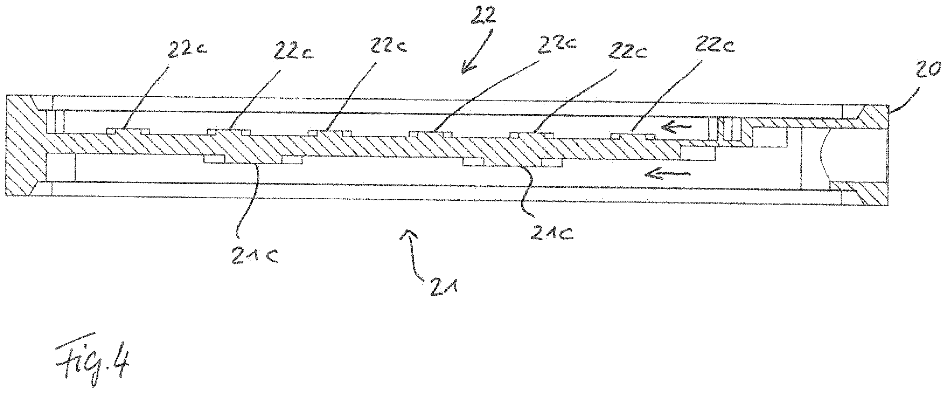

Figur 4 zeigt ein Schnittbild durch den von der erfindungsgemäßen Vorwärmeinrichtung umfassten Block 20 entlang der Linie A-A aus Figur 3. Der Schnitt zeigt oben die Treibstofftransporteinrichtung 22 und unten die Wärmemitteltransporteinrichtung 21. Dabei geht der Schnitt jeweils durch einen geraden Teil des Transportkanals 25, 26, wobei er auf der rechten Seite unten den Wärmemitteleinlass 21a oder -auslass 21b zeigt. Auf dem Boden der Kanäle, also zur Mitte des Blocks 20 hin, sind Strömungsverwirbelungsmittel 21c, 22c erhaben eingebracht, die dafür sorgen, dass sich das Wärmemittel bzw. der Treibstoff verwirbeln und es so zu einer Vermischung des Wärmemittels bzw. des Treibstoffs kommt, so dass die Temperatur und damit die Wärmeübertragung sich möglichst gleich verteilt.

In dieser Vorwärmeinrichtung 1 können sowohl das Wärmemittel als auch der Treibstoff hinreichend lange verweilen, um die erforderliche Kraftstofftemperatur sicherzustellen.

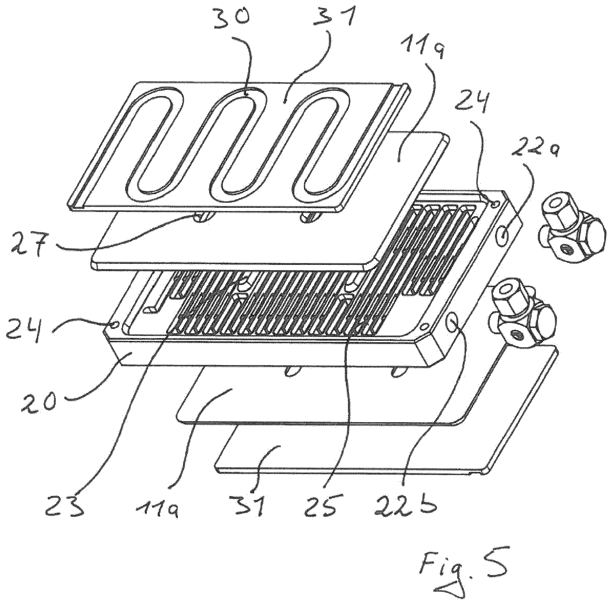

Figur 5 zeigt eine weitere Ausführungsform einer erfindungsgemäßen Vorwärmeinrichtung 1 in einer Explosionsdarstellung. Die Wärmezufuhr erfolgt bei dieser Vorwärmeinrichtung 1 über Heizelemente 30. In den quaderförmigen Block 20 sind in den beiden großen Flächen die offenen Treibstoffkanäle 25 mäandernd eingearbeitet. Dabei ist der Treibstoffkanal 25 so ausgearbeitet, dass der Einlass 22a und der Auslass 22b der Treibstofftransporteinrichtung 22 an einer Schmalseite angeordnet sind. Das hat den Vorteil, dass bei einem späteren Einbau der Vorwärmeinrichtung 1 in ein bestehendes Treibstofftransportsystem keine großen Umlegungen der Leitungen erfolgen müssen. Wie bereits vorher schon ausgeführt, befinden sich im Inneren zwischen dem mäandernden Treibstoffkanal 25 Führungsstege 23, an die die Langlöcher der Abdeckplatten 11a angelegt werden, um den Transportkanal 25 schlüssig verschließen zu können. In dieser Ausführungsform wird außen an jeder Abdeckplatte 11a eine Trägerplatte 31 angeordnet, die ein Heizelement 30 formstabil trägt. Es ist auch denkbar, das Heizelement 30 nur an einer Seite anzuordnen. Ebenso ist es möglich, das Heizelement 30 unmittelbar an eine Abdeckplatte 11a anzuordnen oder Vertiefungen in die Abdeckplatte 11a einzulassen, in denen die Heizelemente 30 angeordnet werden. Gegen Wärmeverluste der Vorwärmeinrichtung 1 an das Umfeld wird die Abdeckplatte 11a von einem isolierenden Gehäusedeckel 10a (hier nicht gezeigt) abgedeckt.

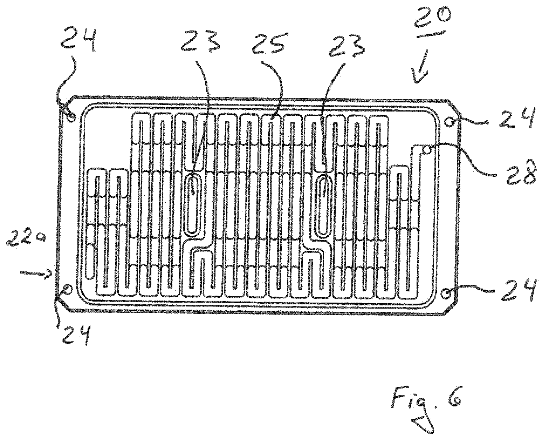

In der Draufsicht, die in Figur 6 gezeigt wird, ist das Mäandern des Treibstoffkanals 25 gut zu erkennen. Beispielhaft ist hier die "Einlassebene" herausgegriffen. Der Treibstoff gelangt über den Treibstoffeinlass 22a - aus der Draufsicht nicht zu erkennen - in den Treibstoffkanal 25 und wird - in der Figur - von links nach rechts geführt. Am rechten Ende wird der Treibstoff in einen Durchtritt 28 geführt, durch den er von der "Einlassebene" in die, aus dieser Perspektive, darunterliegende "Auslassebene" geführt. Dort wird der Treibstoff dann von rechts nach links geführt und durch den Treibstoffauslass 22b (nicht gezeigt) wieder aus der Vorwärmeinrichtung 1 herausgeführt. Durch die Führung des Treibstoffs in zwei Ebenen wird die Wärmetauschfläche quasi verdoppelt, ohne die Grundfläche der Vorwärmeinrichtung 1 zu verändern.

Die beschriebenen Ausführungsformen stellen keine Beschränkung des erfindungsgemäßen Gegenstands dar. So ist es auch denkbar, einen Vorwärmetauscher 1, wie er in den Figuren 1 bis 4 beschrieben wird, auf der Treibstoff führenden Seite mit einem Heizelement, wie es in Figur 5 beschrieben wird, auszustatten, um so zusätzliche Wärmeleistung eintragen zu können. Ebenso ist es denkbar, beide großen Flächen mit Heizelementen 30 auszustatten oder andererseits eine Vorwärmeinrichtung 1, wie sie in Figur 5 beschrieben wird, mit nur einem Heizelement auszustatten. Auch umfasst eine erfindungsgemäße Vorwärmeinrichtung 1, wenn zwei oder mehr Heizelemente an einer Abdeckplatte angeordnet sind.

## Patentansprüche

1. Vorwärmeinrichtung (1) zum Vorwärmen von Treibstoff einer Brennkraftmaschine mit einem Wärmemittel, aufweisend:
- eine Treibstofftransporteinrichtung (22) mit einem Treibstoffeinlass (22a) und einem Treibstoffauslass (22b) sowie einem den Treibstoffeinlass (22a) und den Treibstoffauslass (22b) verbindenden Treibstofftransportkanal (25),
- eine Wärmemitteltransporteinrichtung (21) mit einem Wärmemitteleinlass (21a) und einem Wärmemittelauslass (21b) sowie einem den Wärmemitteleinlass (21a) und den Wärmemittelauslass (21b) verbindenden Wärmemitteltransportkanal (26)und/oder mindestens ein Heizelement (30),wobei die Treibstofftransporteinrichtung (22) und Wärmemitteltransporteinrichtung (21) und/oder das mindestens eine Heizelement (30) sich in thermischem Kontakt zueinander befinden und so einen Wärmetauscher bilden, über welchen ein in der Treibstofftransporteinrichtung (22) transportierter Treibstoff durch ein in der Wärmemitteltransporteinrichtung (21) transportiertes Wärmemittel und/oder durch das mindes-tens eine Heizelement (30) erwärmt werden kann, und wobei
- die Wärmemitteltransporteinrichtung (21) und die Treibstofftransporteinrichtung (22) in einem metallischen Block (20) angeordnet sind und der auf einer ersten Seite des Blocks (20) angeordnete sowie in dem metallischen Block (20) eingearbeitete, eingefräste oder eingelassene Treibstofftransportkanal (25) und der auf einer, insbesondere der ersten Seite gegenüberliegenden, zweiten Seite des Blocks (20) angeordnete sowie in die zweite Seite eingearbeitete, eingefräste oder eingelassene Wärme- mitteltransportkanal (26) jeweils in dem Block (20), zumindest abschnittweise, mäanderförmig und insbesondere strömungstechnisch voneinander separiert ausgebildet sind,
und/oder
- die Treibstofftransporteinrichtung (22) in einem metallischen Block (20) angeordnet ist und der in dem metallischen Block (20) eingearbeitete, eingefräste oder eingelassene Treibstofftransportkanal (25) zumindest abschnittweise mäanderförmig ausgebildet ist und das mindestens eine Heizelement (30) in oder an mindestens einer Abdeckplatte (11a, 11b) des metallischen.Blocks (20) angeordnet ist,
**dadurch gekennzeichnet,**
**dass** der metallische Block (20) Kupfer aufweist oder aus Kupfer besteht,
und **dass** der Treibstofftransportkanal (25) oder der Treibstofftransportkanal (25) und der Wärme- mitteltransportkanal (26) durch, insbesondere jeweils, mindestens eine Abdeckplatte (11a bzw. 11b) abgedeckt sind/ist, in deren Mitte ein Langloch (27) oder eine längliche Vertiefung angeordnet ist, welche/s formschlüssig über einen auf einer offenen Seite des Blocks (20) an einem Mittelsteg gelegenen Vorsprung oder Führungssteg (23) gelegt ist.

2. Vorwärmeinrichtung (1) nach einem der vorigen Ansprüche,
**dadurch gekennzeichnet,**
**dass** im Treibstofftransportkanal (25) Strömungsverwirbelungsmittel (21c, 22c) angeordnet sind.

3. Vorwärmeinrichtung (1) nach einem der vorigen Ansprüche,
**dadurch gekennzeichnet,**
**dass** die Abdeckplatten (11a, 11b) mit dem Block (20) fest verbunden, insbesondere verschweißt, sind.

4. Vorwärmeinrichtung (1) nach einem der vorigen Ansprüche,
**dadurch gekennzeichnet,**
**dass** im Wärmemitteltransportkanal (26) Strömungsverwirbelungsmittel (21c, 22c) angeordnet sind.

5. Vorwärmeeinrichtung (1) Anspruch 2 oder 4,
**dadurch gekennzeichnet,**
**dass** die Strömungsverwirbelungsmittel (21c, 22c) als Stufen und/oder Vorsprünge ausgebildet sind.

6. Vorwärmeinrichtung (1) nach einem der vorigen Ansprüche,
**dadurch gekennzeichnet,**
**dass** das mindestens eine Heizelement (30) an der Abdeckplatte (11a) des Treibstofftransportkanals (25) angeordnet ist.

7. Vorwärmeinrichtung (1) nach einem der vorigen Ansprüche,
**dadurch gekennzeichnet,**
**dass** jeweils mindestens ein Heizelement (30) an der Oberfläche beider Abdeckplatten (11a, 11b) angeordnet oder in die Oberfläche eingelassen ist.

8. Vorwärmeinrichtung (1) nach einem der vorigen Ansprüche,
**dadurch gekennzeichnet,**
**dass** die Außenkontur des Blocks (20) etwa quaderförmig ist.

9. Fahrzeug, aufweisend einen Motor, einen Treibstofftank, Treibstoff, der sich im Treibstofftank befindet, ein Treibstoffzuführsystem, das den Treibstoff dem Motor zuführt, und eine zwischen Treibstofftank und Motor geschaltete Vorwärmeinrichtung (1) nach einem der vorigen Ansprüche, wobei der Treibstoffeinlass (22a) der Vorwärmeinrichtung (1) mit einem zum Treibstofftank führenden Leitungsstrang und Treibstoffauslass (22b) der Vorwärmeinrichtung (1) mit einem zum Motor führenden Leitungsstrang verbunden ist, und wobei ein Wärmemittel im Kreislauf durch die Wärmemitteltransporteinrichtung (21) geführt ist und/oder mindestens ein Heizelement (30) betrieben wird.

10. Fahrzeug nach Anspruch 9,
**dadurch gekennzeichnet,**
**dass** der Treibstoff ein fluider Treibstoff, insbesondere Diesel, ist.

11. Fahrzeug nach Anspruch 9 oder 10,
**dadurch gekennzeichnet,**
**dass** das Wärmemittel ein Fluid, insbesondere Wasser, ist.

12. Fahrzeug nach Anspruch 9 oder 10,
**dadurch gekennzeichnet,**
**dass** das mindestens eine Heizelement elektrisch betrieben wird.

13. Fahrzeug nach einem der Ansprüche 9 bis 12,
**dadurch gekennzeichnet,**
**dass** es ein Wasserfahrzeug, insbesondere ein Schiff, ist.

## Claims

1. Preheater (1) for preheating the fuel of an internal combustion engine with a heating medium, comprising:
- a fuel transport unit (22) with a fuel inlet (22a) and a fuel outlet (22b) as well as a fuel transport duct (25) connecting the fuel inlet (22a) and the fuel outlet (22b);
- a heating medium transport unit (21) with a heating medium inlet (21a) and a heating medium outlet (21b) as well as a heating medium transport duct (26) connecting the heating medium inlet (21a) and the heating medium outlet (21b), and/or at least one heating element (30), wherein the fuel transport unit (22) and the heating medium transport unit (21) and/or the at least the one heating element (30) are in thermal contact with one another and thus form a heat exchanger, via which a fuel transported in the fuel transport unit (22) can be heated by the heating medium transported in the heating medium transport unit (21), and/or by the at least one heating element (30), and wherein the heating medium transport unit (21) and the fuel transport unit (22) are arranged in a metal block (20) and the fuel transport duct 25, which is arranged on a first side of the block (20) and incorporated, milled or inserted in the metal block (20), and the heating medium transport duct (26) arranged on a second side of the block (20), in particular opposite the first side and incorporated, milled or inserted into the second side, are each formed in the block (20) with separate flows from one another in meander fashion in at least some portions, and/or the fuel transport unit (22) is arranged in a metal block (20) and the fuel transport duct (25) incorporated, milled or inserted in the metal block (20) is formed in meander fashion in at least some portions and the at least one heating element (30) is arranged in or on at least one cover plate (11a, 11b) of the metal block (20),
**characterised in that** the metal block (20) contains copper or is made from copper, and that the fuel transport duct (25) or the fuel transport duct (25) and the heating medium transport duct (26) is/are covered by in particular in each case at least one cover plate (11a, 11b), in the centre of which there is an elongated hole (27) or an elongated depression which is placed in form-locking manner over a projection or guide web (23) which is provided on an open side of the block (20) on a centre web.

2. Preheater (1) according to one of the preceding claims **characterised in that**
flow vortex means (21c, 22c) are arranged in the fuel transport duct (25).

3. Preheater (1) according to one of the preceding claims **characterised in that**
the cover plates (11a, 11b) are fixedly connected in particular welded to the block (20).

4. Preheater (1) according to one of the preceding claims **characterised in that**
flow vortex means (21c, 22c) are arranged in the heating medium transport duct (26).

5. Preheater (1) according to claim 2 or 4 **characterised in that**
the flow vortex means (21c, 22c) are configured as steps and/or projections.

6. Preheater (1) according to one of the preceding claims **characterised in that**
the at least one heating element (30) is arranged on the cover plate (11a) of the fuel transport duct (25).

7. Preheater (1) according to one of the preceding claims **characterised in that**
in each case at least one heating element (30) is arranged on the surface of the two cover plates (11a, 11b) or is let into the surface.

8. Preheater (1) according to one of the preceding claims **characterised in that**
the outer contour of the block (20) is roughly cube-shaped.

9. Vehicle, having an engine, a fuel tank, fuel which is situated in the fuel tank, a fuel supply system which supplies the fuel to the engine, and a preheater (1) connected in between the fuel tank and the engine according to one of the preceding claims, wherein the fuel inlet (22a) of the preheater (1) is connected to a pipeline leading to the fuel tank, and the fuel outlet (22b) of the preheater (1) is connected to a pipeline leading to the engine, and wherein a heating medium is guided in circuit through the heating medium transport unit (21) and/or at least one heating element (30) is operated.

10. Vehicle according to claim 9
**characterised in that**
the fuel is a liquid fuel, in particular diesel.

11. Vehicle according to claim 9 or 10
**characterised in that**
the heating medium is a fluid, in particular water.

12. Vehicle according to claim 9 or 10
**characterised in that**
the at least one heating element is electrically operated.

13. Vehicle according to one of claims 9 to 12
**characterised in that**
it is a water craft, in a particular ship.

## Revendications

1. Dispositif de préchauffage (1) pour le préchauffage de carburant d'un moteur à combustion interne comprenant un liquide thermique, comportant:
- un dispositif de transport de carburant (22) ayant une entrée de carburant (22a) et une sortie de carburant (22b) ainsi qu'un canal de transport de carburant (25) reliant l'entrée de carburant (22a) et la sortie de carburant (22b),
- un dispositif de transport de liquide thermique (21) ayant une entrée de liquide thermique (21a) et une sortie de liquide thermique (21b) ainsi qu'un canal de transport de carburant (26) reliant l'entrée de liquide thermique (21a) et la sortie de liquide thermique (21b) et/ou au moins un élément chauffant (30), dans lequel le dispositif de transport de carburant (22) et le dispositif de transport de liquide thermique (21) et/ou l'au moins un élément chauffant (30) sont en contact thermique les uns avec les autres et forment ainsi un échangeur de chaleur, par le biais duquel un carburant transporté dans le dispositif de transport de carburant (22) peut être chauffé par un liquide thermique transporté dans le dispositif de transport de liquide thermique (21) et/ou par l'au moins un élément chauffant (30),
et dans lequel
- le dispositif de transport de liquide thermique (21) et le dispositif de transport de carburant (22) sont disposés dans un bloc métallique (20), et le canal de transport de carburant (25) disposé sur un premier côté du bloc (20) et incorporé, fraisé ou encastré dans le bloc métallique (20) et le canal de transport de liquide thermique (26) disposé sur un deuxième coté du bloc (20) surtout à l'opposé du premier côté et incorporé, fraisé ou encastré dans le deuxième côté sont formés chacun au moins partiellement de manière méandreuse et en particulier fluidiquement séparés l'un de l'autre dans le bloc (20),
et/ou
- le dispositif de transport de carburant (22) est disposé dans un bloc métallique (20), et le canal de transport de carburant (25) , incorporé, fraisé ou encastré dans le bloc métallique (20) est formé au moins partiellement de manière méandreuse et l'au moins un élément chauffant (30) est disposé dans ou au moins sur une plaque de recouvrement (11a, 11b) du bloc métallique (20),
**caractérisé en ce**
**que** le bloc métallique (20) comporte du cuivre ou est en cuivre, et que le canal de transport de carburant (25) ou le canal de transport de carburant (25) et le canal de transport de carburant (26) est/sont recouvert(s) par, surtout chacun, au moins une plaque de recouvrement (11a et/ou11b), dans le centre de laquelle est agencée une lumière (27) ou une cavité longitudinale qui est placée à engagement positif à travers une saillie ou une nervure de guidage (23) située sur un côté ouvert du bloc (20) sur une âme centrale.

2. Dispositif de préchauffage (1) selon l'une quelconque des revendications précédente
**caractérisé en ce**
**que** des moyens de turbulences de courant (21c, 22c) sont disposées dans le canal de transport de carburant (25) .

3. Dispositif de préchauffage (1) selon l'une quelconque des revendications précédentes,
**caractérisé en ce**
**que** les plaques de recouvrement (11a, 11b) sont solidaires au bloc (20), surtout soudées au bloc.

4. Dispositif de préchauffage (1) selon l'une quelconque des revendications précédentes,
**caractérisé en ce**
**que** des moyens de turbulences de courant (21c, 22c) sont disposés dans le canal de transport de carburant (26) .

5. Dispositif de préchauffage (1) selon la revendication 2 ou 4,
**caractérisé en ce**
**que** les moyens de turbulences de courant (21c, 22c) sont formés en tant que gradins et/ou saillies.

6. Dispositif de préchauffage (1) selon l'une quelconque des revendications précédentes,
**caractérisé en ce**
**que** l'au moins un élément chauffant (30) est disposé à la plaque de recouvrement (11a) du canal de transport de carburant (25).

7. Dispositif de préchauffage (1) selon l'une quelconque des revendications précédentes,
**caractérisé en ce**
**qu'**au moins un élément chauffant (30) chacun est disposé à la surface des deux plaques de recouvrement (11a, 11b) ou est encastré dans la surface.

8. Dispositif de préchauffage (1) selon l'une quelconque des revendications précédentes,
**caractérisé en ce**
**que** le contour externe du bloc (20) est approximativement en forme de parallélépipède.

9. Véhicule, comportant un moteur, un réservoir de carburant, du carburant se trouvant dans le réservoir de carburant, un système d'alimentation du carburant qui fournit le carburant au moteur, et un dispositif de préchauffage (1) interposé entre le réservoir de carburant et le moteur selon l'une quelconque des revendications précédentes, dans lequel l'entrée de carburant (22a) du dispositif de préchauffage (1) est reliée avec une branche de ligne menant au réservoir de carburant et la sortie de carburant (22b) du dispositif de préchauffage (1) est reliée avec une branche de ligne menant au moteur, et dans lequel un liquide thermique est mené en circuit à travers le dispositif de transport de liquide thermique (21) et/ou au moins un élément chauffant (30) est opéré.

10. Véhicule selon la revendication 9,
**caractérisé en ce**
**que** le carburant est un carburant fluide, surtout du gasoil.

11. Véhicule selon la revendication 9 ou 10,
**caractérisé en ce**
**que** le liquide thermique est un fluide, surtout de l'eau.

12. Véhicule selon la revendication 9 ou 10,
**caractérisé en ce**
**que** l'au moins un élément chauffant est opéré électriquement.

13. Véhicule selon l'une quelconque des revendications 9 à 12,
**caractérisé en ce**
**qu'**il est un navire, surtout un bateau.
